# EUROPÄISCHE PATENTSCHRIFT

(11) **EP 2 923 421 B1**
(45) Veröffentlichungstag und Bekanntmachung des Hinweises auf die Patenterteilung: **23.08.2017**
(21) Anmeldenummer: 13791958.5
(22) Anmeldetag: 06.11.2013
(51) Int. Cl.: H02G 3/06, H02G 3/08

(54) **EXPLOSIONSGESCHÜTZTE ANORDNUNG MIT EINER KABELVERBINDUNGSEINRICHTUNG UND EINEM KABEL**
EXPLOSION-PROOF ASSEMBLY HAVING A CABLE-CONNECTING DEVICE AND A CABLE
AGENCEMENT ANTIDÉFLAGRANT COMPRENANT UN SYSTÈME DE JONCTION DE CÂBLE ET UN CÂBLE

(30) Priorität: 22.11.2012 DE 102012111270
(43) Veröffentlichungstag der Anmeldung: 30.09.2015
(73) Patentinhaber: R. Stahl Schaltgeräte GmbH, 74638 Waldenburg (DE)
(72) Erfinder: SCHWARZ, Normen, 99423 Weimar (DE); HERMANN, Wolf, 74613 Öhringen (DE)
(74) Vertreter: Rüger, Barthelt & Abel
(86) Internationale Anmeldenummer: PCT/EP2013/073147
(87) Internationale Veröffentlichungsnummer: WO 2014/079688

(56) Entgegenhaltungen:
- DE-A1- 3 110 240
- DE-A1-102010 006 893
- DE-B4- 10 258 100
- US-A- 2 900 436
- US-A1- 2010 108 020

## Beschreibung

Die Erfindung betrifft eine explosionsgeschützte Anordnung, die eine Kabelverbindungseinrichtung und ein mechanisch damit verbundenes Kabel aufweist. Die Kabelverbindungseinrichtung dient beispielsweise dazu, ein mehrere Adern aufweisendes Kabel explosionsgeschützt durch die Wand eines explosionsgeschützten Gehäuses zu führen oder eine elektrische Kabelverbindung explosionsgeschützt zu kapseln.

US 2010/0108020 A1 beschreibt eine explosionsgeschützte Anordnung, die eine Kabelverbindungseinrichtung und ein mechanisch damit verbundenes Kabel mit wenigstens einer Ader und einer die Ader umgebenden Kabelummantelung aufweist. Die Kabelverbindungseinrichtung weist eine Innenhülse und eine die Innenhülse umschließende Außenhülse auf. Die Innenhülse hat einen zylindrischen Kabelkanal, dessen Innendurchmesser etwa dem Außendurchmesser der Kabelummantelung entspricht.

Eine explosionsgeschützte Kabelverschraubung ist aus DE 10 2010 006 893 A1 bekannt. Bei der Kabelverschraubung dient ein Stutzen zur Befestigung beispielsweise an einem Gehäuse. Die Kabelverschraubung ist insgesamt hülsenförmig ausgeführt. Das Kabel erstreckt sich entlang eines Kabelkanals. Mit dem Stutzen ist ein Druckelement verschraubt. Im Stutzen ist ein hohlzylindrischer Dichtungskörper angeordnet. Beim Verschrauben des Druckelements mit dem Stutzen wird der Dichtungskörper axial zusammengedrückt, wobei er sich nach radial innen in den Kabelkanal ausdehnt und sich an das Kabel andrückt. Bei dieser axialen Verschiebung kann auch eine Axialbewegung zwischen zwei komplementären Keilflächen bewirkt werden, zwischen denen ein Klemmspalt ausgebildet ist. In diesem Klemmspalt kann eine Schirmung des Kabels eingeklemmt werden.

Ähnliche Kabelverschraubungen sind auch aus der Praxis bekannt. Zwar können damit auch Kabel mit mehreren Adern beispielsweise durch eine Wand eines explosionsgeschützten Gehäuses geführt werden. Allerdings hat sich gezeigt, dass bei solchen Verschraubungen das Material der Kabelummantelung an einer kleinen Stelle verformt wird. Aufgrund von Setzungseffekten können sich Spalte bilden oder vergrößern und die dauerhafte Zünddurchschlagsicherheit gefährden.

Um eine dauerhafte Zünddurchschlagsicherheit zu gewährleisten wird daher häufig jede Ader eines Kabels separat explosionsgeschützt verbunden, beispielsweise vergossen. Der Aufwand hierfür ist groß und die Einrichtung dadurch sehr teuer.

Zur mechanischen Verbindung einer Kabelverbindungseinrichtung mit einem Kabel sind außerdem Krimphülsen bekannt, wie sie beispielsweise in DE 102 58 100 B4 beschrieben sind. Die Krimphülse dient dort zum Festklemmen eines Kabels an einem Sensorkörper.

Ausgehend von diesem Stand der Technik kann es als eine Aufgabe der vorliegenden Erfindung angesehen werden, eine verbesserte explosionsgeschützte Anordnung zwischen einer Kabelverbindungseinrichtung und einem Kabel zu schaffen.

Diese Aufgabe wird mit den Merkmalen des Patentanspruches 1 gelöst. Ein erfindungsgemäßes Verfahren zur Herstellung der Verbindung zwischen der Kabelverbindungseinrichtung und dem Kabel ist im Patentanspruch 11 angegeben.

Die explosionsgeschützte Anordnung verbindet die Kabelverbindungseinrichtung mit einem wenigstens eine und vorzugsweise mehrere Adern aufweisenden Kabel, wobei eine Kabelummantelung aus einem Elastomermaterial vorhanden ist, die die eine Ader oder die mehreren Adern umschließt.

Es wird somit eine Anordnung geschaffen, bei der anders als bisher ein Kabel unabhängig von der Anzahl der Adern durch einen zylindrischen Kabelkanal der Kabelverbindungseinrichtung hindurchgeführt und dort explosionsgeschützt befestigt ist. Die Kabelverbindungseinrichtung weist hierzu eine Außenhülse mit einem Krimpabschnitt auf. Im Ausgangszustand hat der Krimpabschnitt eine vorzugsweise hohlzylindrische Gestalt. Er besteht aus einem plastisch verformbaren ersten Material, vorzugsweise einem Metall und bei einem Ausführungsbeispiel Stahl. Ferner ist eine Innenhülse vorhanden, die im unverformten Ausgangszustand ebenfalls hohlzylindrisch ausgestaltet ist und den zylindrischen Kabelkanal aufweist. Die Innenhülse besteht aus einem elastisch verformbaren zweiten Material, beispielsweise aus einem Elastomer oder einer Knetlegierung, insbesondere einer Aluminium-Knetlegierung. Das erste Material und das zweite Material sind voneinander verschieden.

Der Innendurchmesser der Innenhülse, also der Durchmesser des Kabelkanals, entspricht im Wesentlichen dem Außendurchmesser der Kabelummantelung des Kabels. Der Krimpabschnitt und/oder die Außenhülse umschließt die Innenhülse koaxial. Zur Herstellung der mechanischen Verbindung zwischen der Kabelverbindungseinrichtung und dem Kabel wird der Krimpabschnitt der Außenhülse mit einem Krimpwerkzeug mechanisch verformt, so dass sich die radialen Abmessungen des Krimpabschnitts verringern. Dadurch wird eine elastische Verformung sowohl der Innenhülse, als auch der Kabelummantelung erreicht. Dabei ist es wesentlich, dass sowohl die Innenhülse als auch die Kabelummantelung aus elastisch verformbarem Material bestehen. Ein plastischer Materialfluss der Innenhülse und der Kabelummantelung ist vermieden. Denn dadurch könnten sich durch ein Setzen des Materials mit der Zeit Zündspalte in der Anordnung bilden, was erfindungsgemäß vermieden ist.

Die elastische Verformung der Kabelummantelung führt dazu, dass diese zündspaltfrei an einerseits an der Innenhülse und andererseits an den umschlossenen Adern des Kabels anliegt. Im von der Kabelummantelung umschlossenen Kabelinneren ist deswegen kein Zündspalt vorhanden. Die Kabelummantelung wird über die Innenhülse entlang ihres gesamten Umfangsbereichs radial nach innen gedrückt und umschließt die darin verlaufenden elektrischen Adern ebenfalls zündspaltfrei.

Unter der zündspaltfreien Ausführung der Kabelverbindungseinrichtung ist zu verstehen, dass zwar eine völlig spaltfreie Kabeldurchführung erreicht werden kann, aber kleine zünddurchschlagsichere Spalte mit ausreichend geringem Querschnitt und/oder ausreichender Länge vorhanden sein können. Beispielsweise können solche kleinen, zünddurchschlagsicheren Spalte zwischen mehreren aneinander anliegenden Adern und/oder zwischen der wenigstens einen Ader und der Kabelummantelung und/oder zwischen der Kabelummantelung und der Innenhülse und/oder zwischen der Innenhülse und der Außenhülse vorhanden sein.

Mithilfe dieser Kabelverbindungseinrichtung kann ein mehradriges Kabel sehr einfach explosionsgeschützt durch eine Gehäusewand geführt oder im Bereich einer elektrischen Verbindungsstelle umschlossen werden. Eine separate explosionsgeschützte Verbindung für jede elektrische Ader ist nicht notwendig. Auch ein innerhalb der Kabelummantelung möglicherweise vorhandene Spalt wird ausreichend verringert oder eliminiert, so dass die Vorgaben des Explosionsschutzes sicher erreicht werden.

Es ist vorteilhaft, wenn der Krimpabschnitt der Außenhülse im unverformten Zustand einen Innendurchmesser aufweist, der im Wesentlichen dem Außendurchmesser der Innenhülse entspricht. Vorzugsweise ist der Innendurchmesser des Krimpabschnitts im unverformten Zustand höchstens so groß, wie der Außendurchmesser der Innenhülse. Dadurch lassen sich bereits im unverformten Zustand größere Spalte zwischen der Innenhülse und der Außenhülse vermeiden, was die Herstellung der explosionsgeschützten Verbindung mit dem Kabel vereinfacht.

Bei koaxial zueinander angeordneter Innen- und Außenhülse liegen diese beiden Hülsen vorzugsweise in zumindest einem axial zum Krimpabschnitt benachbarten Kontaktabschnitt der Außenhülse zündspaltfrei aneinander an, unabhängig davon, ob der Krimpabschnitt der Außenhülse bereits verformt wurde oder nicht. Insbesondere bleibt der Kontaktabschnitt der Außenhülse beim Krimpen unverformt. Durch diese zündspaltfreie Verbindung zwischen Innen- und Außenhülse im Kontaktabschnitt kann sichergestellt werden, dass auch dann, wenn durch das Verformen des Krimpabschnitts ein Zündspalt zwischen dem Krimpabschnitt der Außenhülse und der Innenhülse entstehen sollte, eine zünddurchschlagsichere Verbindung zwischen den beiden Hülsen besteht.

Zwischen der Innenhülse und der Außenhülse kann wenigstens eine Dichtung angeordnet sein. Die Dichtung kann beispielsweise als O-Ring ausgeführt sein. Insbesondere bei einer nicht kreisförmigen Verformung des Krimpabschnitts mit einem Krimpwerkzeug bei der Herstellung der Verbindung kann durch diese Dichtung ein Schutz gegen das Eindringen von Staub und/oder Feuchtigkeit erreicht werden.. Es könnten auch mehrere solcher Dichtungen vorhanden sein. Zur Positionierung der Dichtung kann in der Innenhülse eine radial nach außen offene Ringnut vorhanden sein. Vorzugsweise ist die Tiefe der Ringnut kleiner als die radiale Abmessung des Querschnitts der Dichtung, so dass diese radial aus der Ringnut herausragt und nach dem koaxialen Anordnen von Innen- und Außenhülse dichtend dazwischen anliegt.

Bei einer besonders bevorzugten Ausführungsform ist die Länge des Krimpabschnitts, der bei der Herstellung der mechanischen Verbindung mit dem Kabel mit Hilfe eines Krimpwerkzeugs verformt wird, größer als der Innendurchmesser des Krimpabschnitts. Durch dieses Verhältnis zwischen Länge und Innendurchmesser des Krimpabschnitts wird erreicht, dass die elastische Verformung über eine ausreichende axiale Länge an der Innenhülse und der Kabelummantelung stattfindet und ein Materialfluss bzw. eine Materialverdrängung in axialer Richtung reduziert oder vermieden ist. Dadurch wird die Vermeidung von Zündspalten bei der hergestellten Verbindung weiter verbessert. Unabhängig vom Innendurchmesser des Krimpabschnitts beträgt die Länge des Krimpabschnitts vorzugsweise mindestens sechs Millimeter.

Vorteilhafte Ausgestaltungen der Erfindung ergeben sich aus den abhängigen Patentansprüchen und der Beschreibung. Die Beschreibung beschränkt sich auf wesentliche Merkmale der Erfindung. Die Zeichnung ist ergänzend heranzuziehen. Nachfolgend werden Ausführungsbeispiele der Erfindung anhand der beigefügten Zeichnung im Einzelnen erläutert. Es zeigen:
Figur 1 eine schematische Querschnittsdarstellung eines Ausführungsbeispiels einer erfindungsgemäßen Anordnung aus einer Kabelverbindungseinrichtung und einem mehradrigen Kabel in im unverformten Ausgangszustand,
Figur 2 eine schematische Querschnittsdarstellung des Ausführungsbeispiels nach Figur 1 bei hergestellter explosionsgeschützter Verbindung,
Figur 3 einen Querschnitt durch die Anordnung nach Figur 1 bei nicht hergestellter Verbindung gemäß der Schnittlinie III-III in Figur 1,
Figur 4 einen Querschnitt durch die Anordnung nach Figur 2 bei hergestellter explosionsgeschützter Verbindung gemäß der Schnittlinie IV-IV in Figur 2,
Figur 5 eine schematische Querschnittsdarstellung eines abgewandelten Ausführungsbeispiel einer Kabelverbindungseinrichtung im unverformten Ausgangszustand,
Figur 6 eine schematische Prinzipdarstellung einer Ausführungsform der explosionsgeschützten Anordnung zur Verbindung mit einer Gehäusewand,
Figur 7 eine schematische Prinzipdarstellung eines Ausführungsbeispiels einer Kabelverbindungseinrichtung zur explosionsgeschützten Kapselung einer elektrischen Verbindungsstelle zwischen zwei Kabel und
Figur 8 eine schematische Prinzipdarstellung eines Ausführungsbeispiels einer Kabelverbindungseinrichtung zur explosionsgeschützten Kapselung einer elektrischen Verbindungsstelle mit drei Kabeln.

Die Erfindung betrifft eine Kabelverbindungseinrichtung 10, die dazu dient, eine explosionsgeschützte mechanische Verbindung mit einem Kabel 11 herzustellen. Über die Kabelverbindungseinrichtung 10 kann beispielsweise eine explosionsgeschützte Kabeldurchführung durch eine Gehäusewand oder eine elektrische Verbindungsstelle zwischen mehreren Kabeln 11 nach den Vorschriften des Explosionsschutzes ausgeführt werden.

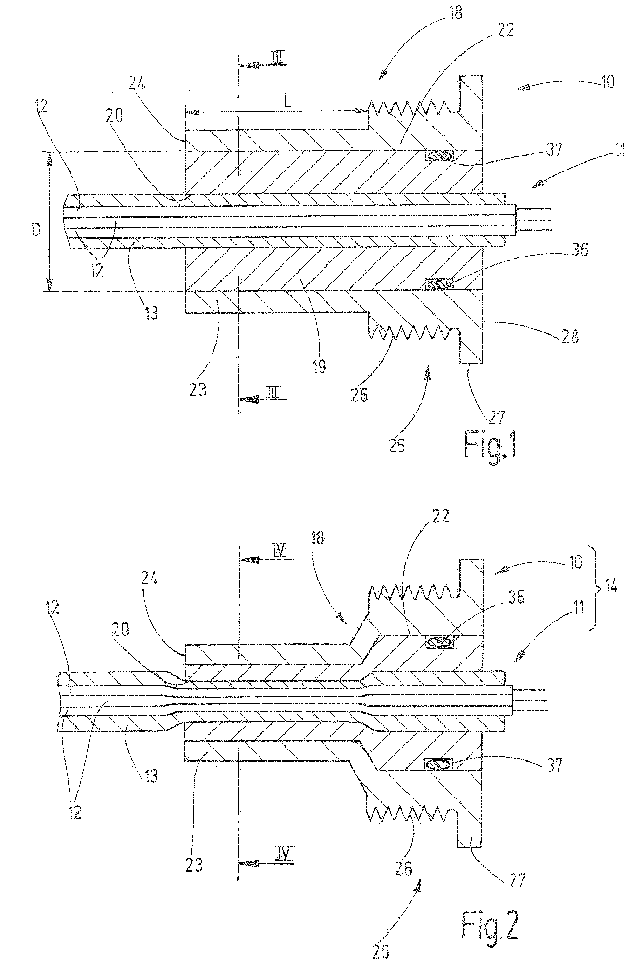

Das Kabel 11 weist wenigstens eine Ader 12 und beispielsgemäß mehrere Adern 12 auf, die von einer gemeinsamen Kabelummantelung 13 umschlossen sind. Die Kabelummantelung 13 besteht aus einem Elastomer und ist daher radial zur Erstreckungsrichtung des Kabels 11 elastisch verformbar. Bei vollständig hergestellter Verbindung zwischen der Kabelverbindungseinrichtung 10 und dem Kabel 11 ist eine explosionsgeschützte Anordnung 14 (Figuren 2, 4 und 6 bis 8) gebildet.

Die Kabelverbindungseinrichtung 10 weist eine Außenhülse 18 und eine Innenhülse 19 auf. Zur Durchführen des Kabels 11 ist in der Innenhülse 19 ein zylindrischer Kabelkanal 20 vorhanden, dessen Innendurchmesser beim Ausführungsbeispiel dem Außendurchmesser der Kabelummantelung 13 des Kabels 11 entspricht. Der Innendurchmesser des Kabelkanals 20 kann auch etwas kleiner als der Außendurchmesser der Kabelummantelung, so dass die Innenhülse 19 unter einer elastischen Verformung auf die Kabelummantelung 13 aufgesteckt wird. Die Innenhülse 19 hat eine hohlzylindrische Form.

Beim Ausführungsbeispiel gemäß der Figuren 1 und 2 hat die Außenhülse 18 in unverformtem Ausgangszustand einen hohlzylindrischen Krimpabschnitt 23 der zur Verformung mit einem Krimpwerkzeug dient. Der Innendurchmesser des Krimpabschnitts 23 entspricht beispielsgemäß dem Außendurchmesser der Innenhülse 19 bei nicht verformtem Krimpabschnitt 23, wie dies in Figur 1 dargestellt ist. Der Krimpabschnitt 23 hat in seinem unverformten Ausgangszustand (Figur 1) in Erstreckungsrichtung des Kabels 11 gemessen eine axiale Länge L, die größer ist als der Innendurchmesser D des Krimpabschnitts 23. Diese axiale Länge L steht für das Umformen des Krimpabschnitts 23 mit dem Krimpwerkzeug zur Verfügung.

Bereits in diesem unverformten Ausgangszustand nach Figuren 1, 3 oder 5 der Außenhülse 18 ist eine zündspaltfreie Verbindung zwischen der Außenhülse 18 und der Innenhülse 19 hergestellt. Bei koaxial zueinander angeordneter Innenhülse 19 und Außenhülse 18 liegen diese beispielsgemäß in einem axial zum Krimpabschnitt 23 benachbarten Kontaktabschnitt 22 der Außenhülse 18 zündspaltfrei aneinander an. Der Kontaktabschnitt 22 der Außenhülse 18 bleibt beim Krimpen unverformt.

Der Krimpabschnitt 23 bildet ein freies Ende 24 der Außenhülse 18. Die Innenhülse 19 und die Außenhülse 18 sind am freien Ende 24 vorzugsweise fluchtend miteinander angeordnet. Der Krimpabschnitt 23 erstreckt sich ausgehend vom freien Ende 24 der Außenhülse 18 bis zu einem Befestigungsabschnitt 25 der Außenhülse 18. Der Befestigungsabschnitt 25 weist beim Ausführungsbeispiel nach Figuren 1 und 2 ein Außengewinde 26 und einen Flansch 27 auf. Der Flansch 27 stellt beispielsgemäß das dem freien Ende 24 entgegengesetzte Befestigungsende 28 der Außenhülse 18 dar. Bei dem in den Figuren 1 und 2 dargestellten Ausführungsbeispiel der Kabelverbindungseinrichtung 10 endet die Innenhülse 19 auch mit dem Befestigungsende 28 bzw. dem Flansch 27 der Außenhülse 24 in einer gemeinsamen Ebene. Somit erstreckt sich die Innenhülse vollständig axial innerhalb der Außenhülse 18.

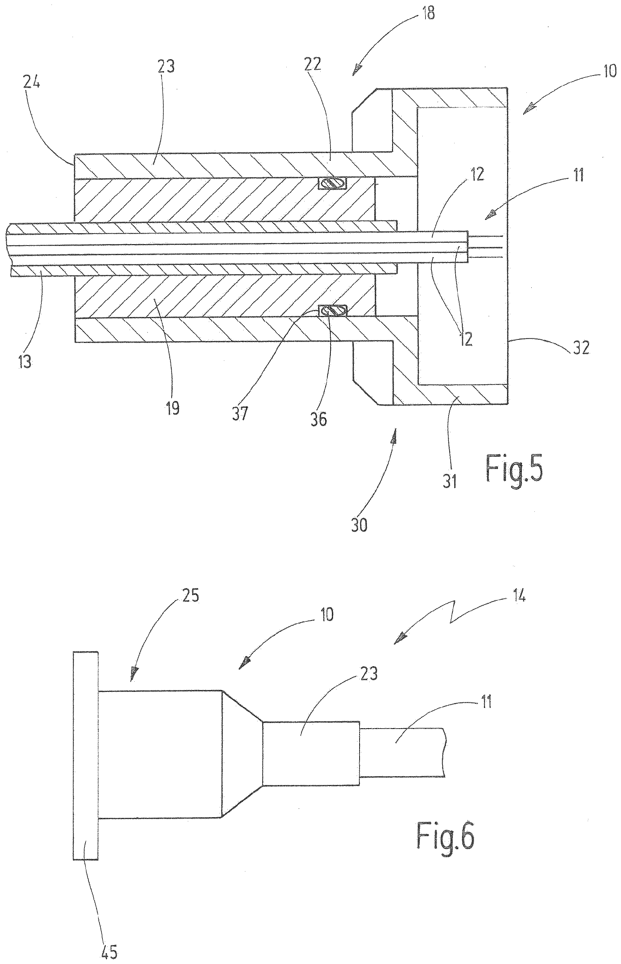

Die Innenhülse 19 ist zumindest entlang des Krimpabschnitts 23 der Außenhülse 18 zwischen dem Kabel 11 und der Außenhülse 18 angeordnet. Die Innenhülse 19 kann somit auch vom freien Ende 24 der Außenhülse 18 entlang des Krimpabschnitts 23 verlaufen und im Bereich des Befestigungsabschnitts 25 vor dem freien Ende 28 enden, wie dies beispielhaft anhand des abgewandelten Ausführungsbeispiels in Figur 5 veranschaulicht ist. Es ist auch möglich, die axiale Länge der Innenhülse 19 größer zu wählen als die der Außenhülse 18.

Die Ausgestaltung des Befestigungsabschnitts 25 kann variieren. Anstelle des Außengewindes 26 und/oder des Flansches 27 können andere Befestigungs- oder Anbringungsmittel vorhanden sein, beispielsweise Rastverbindungsmittel. Beim Ausführungsbeispiel nach Figur 5 ist anstelle des Befestigungsabschnitts 25 ein Kappenabschnitt 30 vorhanden, der sich an den Krimpabschnitt 23 der Außenhülse 18 anschließt. Am Kappenabschnitt 30 ist eine an einer Axialöffnung 32 axial offene Kappe 31 mit einer beispielsgemäß hohlzylindrischen Kontur an der Außenhülse 18 vorhanden. Die Axialöffnung 32 bildet hierbei das dem freien Ende 24 entgegengesetzte Ende der Außenhülse 18. Die Kappe 31 im Kappenabschnitt 30 der Außenhülse 18 kann als Teil einer Abdeckung bzw. eines Gehäuses verwendet werden. Grundsätzlich kann der Kappenabschnitt 30 beliebig ausgestaltet sein.

Die Außenhülse 18 besteht aus einem ersten Material, das bei Aufwendung der Kraft durch ein Krimpwerkzeug plastisch verformbar ist. Die Außenhülse 18 besteht beim Ausführungsbeispiel aus Metall oder einer metallischen Legierung, vorzugsweise aus Stahl. Sie ist beispielsgemäß einstückig durchgängig aus demselben ersten Material ohne Naht- und Fügestellen hergestellt.

Die Innenhülse 19 ist ebenfalls einstückig naht- und fügestellenfrei aus einem einheitlichen zweiten Material hergestellt, das vom ersten Material verschieden ist und eine elastische Verformbarkeit aufweist. Als zweites Material kann beispielsweise eine Knetlegierung, insbesondere eine Aluminium-Knetlegierung dienen. Als zweites Material für die Innenhülse 19 könnte auch ein Elastomer verwendet werden. Wichtig ist, dass sich das zweite Material für die Innenhülse 19 im Unterschied zum ersten Material für die Außenhülse 18 beim Einsatz des Krimpwerkzeuges nicht plastisch, sondern elastisch verformt.

Die Kabelummantelung 13 besteht aus einem elektrisch isolierenden Elastomer, beispielsweise Kautschuk. Die Kunststoffummantelung jeder Ader 12 kann aus demselben Material bestehen wie die Kabelummantelung 13.

Bei den hier beschriebenen Ausführungsformen ist zwischen der Innenhülse 19 und der Außenhülse 18 eine Dichtung 36 angeordnet, die beispielsgemäß als O-Ring ausgeführt ist. Die Dichtung 36 ist beispielsgemäß im Kontaktabschnitt 22 an der Außenhülse 18 angeordnet. Die Dichtung 36 sitzt zur axialen Positionierung in einer Ringnut 37, die in der der Außenhülse 18 zugewandten Außenfläche der Innenhülse 19 eingebracht ist. die radial zur Längsachse der hohlzylindrischen Innenhülse 19 gemessene Tiefe der Ringnut 37 ist dabei geringer als die in dieselbe Richtung gemessene Abmessung des Querschnitts der Dichtung 36, so dass diese nach dem Einsetzen in die Ringnut 37 radial aus dieser herausragt. Beim Anordnen der Außenhülse 18 koaxial zur Innenhülse 19 wird die Dichtung 36 verformt und liegt somit dichtend zwischen der Außenhülse 18 und der Innenhülse 19 an. In den Figuren 1, 2 und 5 ist der verformte Zustand der Dichtung 36 in Gebrauchslage dargestellt. Es versteht sich, dass abweichend zu dem Ausführungsbeispiel die unverformte Querschnittsform der Dichtung 36 nicht rund oder kreisrund sein muss, sondern grundsätzlich jede beliebige Kontur haben kann.

Die mechanische Verbindung zwischen der Kabelverbindungseinrichtung 10 und dem Kabel 11 zur Herstellung der explosionsgeschützten Anordnung 14 wird wie folgt hergestellt:

Das Kabel 11, die Innenhülse 19 und die Außenhülse 18 werden koaxial zueinander an der gewünschten Verbindungsstelle angeordnet. Auf die Reihenfolge kommt es dabei nicht an. Beispielsweise kann zuerst die Innenhülse 19 auf die Kabelummantelung 13 aufgeschoben und anschließend die Außenhülse 18 koaxial zur Innenhülse 19 angeordnet werden. Die Dichtung 36 wird in der Ringnut 37 angeordnet, bevor die Außenhülse 18 koaxial zur Innenhülse 19 angeordnet wird. Die Dichtung 36 liegt dichtend sowohl an der Innenhülse 19, als auch an der Außenhülse 18 an.

Anschließend wird mithilfe eines Krimpwerkzeuges der Krimpabschnitt 23 zum Kabel 11 hin radial nach innen gedrückt und plastisch verformt. Dabei verformen sich sowohl die Innenhülse 19, als auch die Kabelummantelung 13 entlang des Krimpabschnitts 23, was schematisch in Figur 2 veranschaulicht ist. Als Folge hiervon liegt die Kabelummantelung 13 im Bereich des Krimpabschnitts 23 zündspaltfrei an der Innenhülse 19 sowie den Adern 12 des Kabels 11 an. Eventuell vorhandene Spalte werden im Querschnitt verringert oder vollständig geschlossen, wodurch Zündspalte eliminiert werden, so dass eine explosionsgeschützte Verbindung zwischen dem Kabel 11 und der Kabelverbindungseinrichtung 10 hergestellt ist.

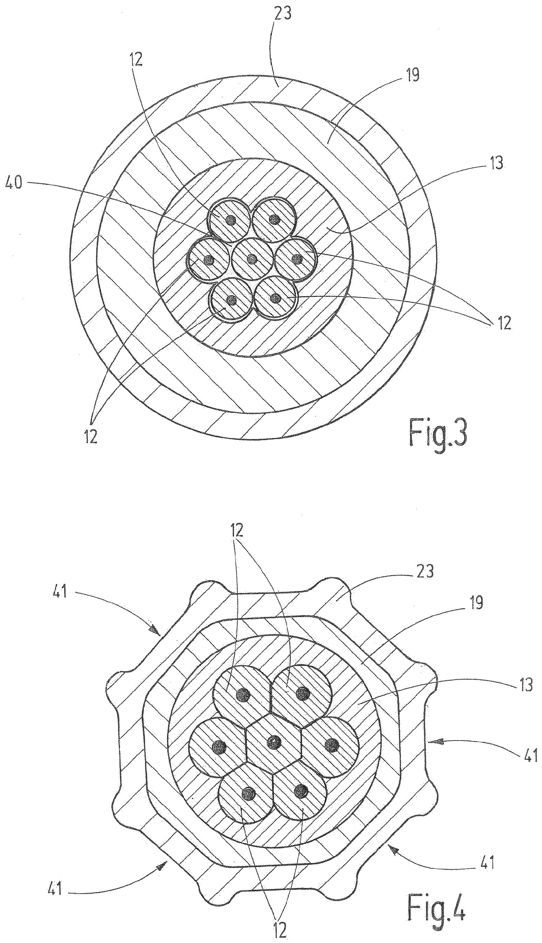

Anhand der Figuren 3 und 4 lässt sich der Effekt der Erfindung erläutern. Figur 3 zeigt den Querschnitt durch die Anordnung 14 im Ausgangszustand bei unverformter Außenhülse 18. Dort ist zu erkennen, dass innerhalb der Kabelummantelung 13 zwischen den Adern 12 und/oder zwischen der Kabelummantelung 13 und den Adern 12 Spalte 40 vorhanden sind. Diese Spalte 40 können einen Zündspalt bilden und müssen daher zur Erzielung des Explosionsschutzes eliminiert werden. Aufgrund der elastomeren Materialien der Kabelummantelung 13 sowie der Innenhülse 19 presst sich die Kabelummantelung 13 an die Adern 12 an und drückt diese Adern 12 gegeneinander. Dabei werden Spalte zwischen der Kabelummantelung 13 und ggf. auch zwischen den Adern 12 eliminiert. Ist eine Vielzahl von Adern 12 innerhalb einer gemeinsamen Kabelummantelung 13 angeordnet, wie dies beispielsgemäß veranschaulicht ist, ist auch die Isolation der einzelnen Adern 12 elastisch verformbar, so dass auch Spalte zwischen unmittelbar aneinander anliegenden Adern 12 durch elastische Verformung eliminiert werden.

Da auch die Innenhülse 19 elastisch verformbar ist, liegt diese dicht am Krimpabschnitt 23 der Außenhülse 18 und an der Kabelummantelung 13 an. Die elastomeren Eigenschaften der Innenhülse 19 sind deshalb wichtig, weil die plastische Verformung des Krimpabschnitts 23, wie in Figur 4 schematisch dargestellt, an in Umfangsrichtung beabstandeten Krimpstellen 41 und somit in Umfangsrichtung betrachtet ungleichmäßig stattfinden kann. Wegen der Elastizität der Innenhülse 19 kann dennoch eine in Umfangsrichtung vollständige und zündspaltfreie Anlage im Krimpabschnitt 23 zwischen der Innenhülse 19 und der Außenhülse 18 erreicht werden. Um nach der Verformung des Krimpabschnitts 23 möglicherweise zwischen der Außenhülse 18 und der Innenhülse 19 dennoch verbleibende Spalte zu vermeiden, ist die Dichtung 36 dichtend zwischen der Innenhülse 19 und der Außenhülse 18 angeordnet.

Die Länge L des Krimpabschnitts 23 ist so groß gewählt, dass bei der plastischen Verformung des Krimpabschnitts 23 durch das Krimpwerkzeug die elastische Verformung der Innenhülse 19 sowie der Kabelummantelung 13 über eine ausreichende Länge erfolgt und nicht lediglich zu einer Materialverdrängung in axialer Richtung führt. Zu diesem Zweck ist die Länge L zumindest so groß wie der Innendurchmesser D des Krimpabschnitts 23 in unverformtem Ausgangszustand. Unabhängig vom Innendurchmesser D des Krimpabschnitts 23 ist die Länge L vorzugsweise größer als sechs Millimeter und weiter vorzugsweise größer als zehn oder zwanzig Millimeter.

In den Figuren 6 bis 8 sind schematisch Anwendungsbeispiele für die Kabelverbindungseinrichtung 10 bzw. die Anordnung 14 dargestellt. Beim Ausführungsbeispiel nach Figur 6 ist die Außenhülse 18 der Kabelverbindungseinrichtung 10 mit ihrem Befestigungsabschnitt 25 an einer Gehäusewand 45 befestigt, um ein Kabel 11 explosionsgeschützt durch die Gehäusewand 45 zu führen.

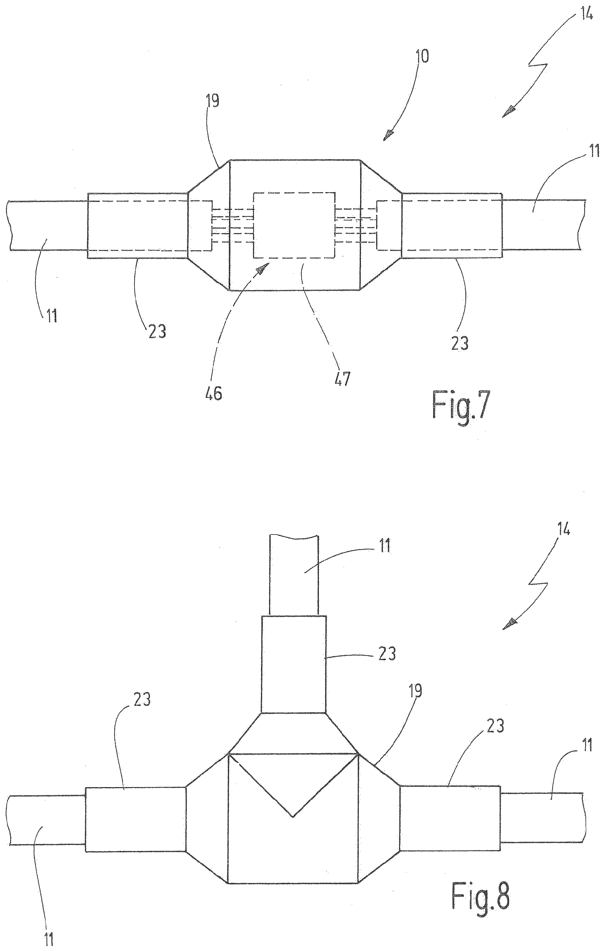

Bei den Ausführungsbeispielen gemäß der Figuren 7 und 8 sind zwei oder mehr Kabel 11 an einer Verbindungsstelle 46 über ein elektrisches Verbindungsmittel 47 elektrisch miteinander verbunden. Die Verbindungsstelle 46 mit dem elektrischen Verbindungsmittel 47 wird durch die Kabelverbindungseinrichtung 10 gekapselt. Abhängig von der Anzahl der zu verbindenden Kabel 11 weist die Kabelverbindungseinrichtung 10 bei den Ausführungsformen gemäß der Figuren 7 und 8 mehrere Krimpabschnitte 23 auf. Der sich an den Krimpabschnitt 23 anschließende Abschnitt der Außenhülse 19 bildet einen geschlossenen Innenraum, in dem das elektrische Verbindungsmittel 47 explosionsgeschützt angeordnet ist.

Bei den in den Figuren 7 und 8 dargestellten Ausführungsformen der Kabelverbindungseinrichtung 10 könnten auch mehrere Außenhülsen 19 mit jeweils einem Krimpabschnitt 23 zur Bildung des gekapselten Innenraums miteinander lösbar oder unlösbar verbunden sein.

Die Erfindung betrifft eine Anordnung 14 aus einer Kabelverbindungseinrichtung 10 und einem mehradrigen Kabel 11, die eine mechanische, explosionsgeschützte Verbindung miteinander bilden. Hierfür weist die Kabelverbindungseinrichtung 10 eine plastisch verformbare Außenhülse 18 mit einem Krimpabschnitt 23 auf. Zwischen einer Kabelummantelung 13 aus Elastomer und dem Krimpabschnitt 23 ist eine hohlzylindrische Innenhülse 19 aus elastisch verformbarem Material angeordnet. Durch radiales plastisches Verformen des Krimpabschnitts 23 wird eine elastische Verformung der Innenhülse 19 sowie der Kabelummantelung 13 bewirkt. Eventuell innerhalb der Kabelummantelung 13 vorhandene Spalte 40 werden aufgrund der Radialkräfte im Krimpabschnitt 23 geschlossen, so dass eine zündspaltfreie Anlage zwischen der Kabelummantelung 13 und den Adern 12 des Kabels 11 sowie der Kabelummantelung 13 und der Innenhülse 19 gewährleistet ist.

### Bezugszeichenliste:

- 10: Kabelverbindungseinrichtung
- 11: Kabel
- 12: Ader
- 13: Kabelummantelung
- 14: Anordnung

- 18: Außenhülse
- 19: Innenhülse
- 20: Kabelkanal

- 22: Kontaktabschnitt
- 23: Krimpabschnitt
- 24: freies Ende
- 25: Befestigungsabschnitt
- 26: Außengewinde
- 27: Flansch
- 28: Befestigungsende
- 29:
- 30: Kappenabschnitt
- 31: Kappe
- 32: Axialöffnung

- 36: Dichtung
- 37: Ringnut

- 40: Spalt
- 41: Krimpstelle

- 45: Gehäusewand
- 46: Verbindungsstelle
- 47: elektrisches Verbindungsmittel

## Patentansprüche

1. Explosionsgeschützte Anordnung (14) mit einer Kabelverbindungseinrichtung (10) und einem damit verbundenen Kabel (11), das wenigstens eine Ader (12) aufweist, wobei die wenigstens eine Ader (12) von einer Kabelummantelung (13) aus einem Elastomer umschlossen ist,
mit einer Außenhülse (18) der Kabelverbindungseinrichtung (10), die einen Krimpabschnitt (23) aufweist, der aus einem plastisch verfombaren ersten Material besteht,
mit einer Innenhülse (19) der Kabelverbindungseinrichtung (10), die von der Außenhülse (18) koaxial umschlossen wird und die einen zylindrischen Kabelkanal (20) aufweist, dessen Innendurchmesser im Wesentlichen dem Außendurchmesser einer Kabelummantelung des Kabels (13) entspricht, wobei die Innenhülse (19) aus einem elastisch verformbaren zweiten Material besteht,
wobei eine mechanische Verbindung zwischen der Kabelverbindungseinrichtung (10) und dem Kabel (11) durch plastisches Verformen des Krimpabschnitts (23) der Außenhülse (18) hergestellt ist, wobei die Innenhülse (19) und die Kabelummantelung (13) elastisch verformt sind und die Kabelummantelung (13) zündspaltfrei an der wenigstens einen Ader (12) und an der Innenhülse (19) anliegt.

2. Explosionsgeschützte Anordnung nach Anspruch 1,
**dadurch gekennzeichnet, dass** der Krimpabschnitt (23) der Außenhülse (18) im unverformten Zustand einen Innendurchmesser (D) aufweist, der im Wesentlichen dem Außendurchmesser der Innenhülse (19) entspricht.

3. Explosionsgeschützte Anordnung nach Anspruch 1 oder 2,
**dadurch gekennzeichnet, dass** zwischen der Innenhülse (19) und der Außenhülse (18) wenigstens eine Dichtung (36) angeordnet ist.

4. Explosionsgeschützte Anordnung nach Anspruch 3,
**dadurch gekennzeichnet, dass** die Dichtung (36) in einer Ringnut (37) in der Innenhülse (19) oder der Außenhülse (18) angeordnet ist.

5. Explosionsgeschützte Anordnung nach Anspruch 4,
**dadurch gekennzeichnet, dass** die Tiefe der Ringnut (37) kleiner ist als die radiale Abmessung der Querschnittskontur der unverformten Dichtung (36).

6. Explosionsgeschützte Anordnung nach einem der vorhergehenden Ansprüche,
**dadurch gekennzeichnet, dass** die Länge (L) des Krimpabschnitts (23) größer ist als der Innendurchmesser (D) des Krimpabschnitts (23).

7. Explosionsgeschützte Anordnung nach einem der vorhergehenden Ansprüche,
**dadurch gekennzeichnet, dass** die Länge (L) des Krimpabschnitts (23) mindestens 6 Millimeter beträgt.

8. Explosionsgeschützte Anordnung nach einem der vorhergehenden Ansprüche,
**dadurch gekennzeichnet, dass** das erste Material Stahl ist.

9. Explosionsgeschützte Anordnung nach einem der vorhergehenden Ansprüche,
**dadurch gekennzeichnet, dass** das zweite Material eine Knetlegierung, insbesondere eine Aluminium-Knetlegierung ist.

10. Explosionsgeschützte Anordnung nach einem der Ansprüche 1 bis 8,
**dadurch gekennzeichnet, dass** das zweite Material ein Elastomer ist.

11. Verfahren zur Herstellung einer explosionsgeschützten mechanischen Verbindung zwischen einem Kabel (11) und einer Kabelverbindungseinrichtung (10), die eine Außenhülse (18) mit einem Krimpabschnitt (23) und eine Innenhülse (19) mit einem zylindrischen Kabelkanal (20) aufweist, dessen Innendurchmesser in etwa dem Außendurchmesser einer Kabelummantelung (13) des Kabels (11) entspricht, wobei die Außenhülse (18) aus einem plastisch verfombaren ersten Material besteht, und wobei die Innenhülse (19) aus einem elastisch verformbaren zweiten Material besteht, und wobei das Kabel (11) mehrere Adern (12) aufweist, die von einer gemeinsamen Kabelummantelung (13) aus einem Elastomermaterial umschlossen sind, mit folgenden Schritten:
- Durchführen des Kabels (11) durch den Kabelkanal (20) der Innenhülse (19) und Anordnen der Außenhülse (18) koaxial zur Innenhülse (19),
- Verformen des Krimpabschnitts (23) der Außenhülse (18) mit einem Krimpwerkzeug, so dass sich die Innenhülse (19) und die Kabelummantelung (13) elastisch verformen und die Kabelummantelung (13) sowohl an der Innenhülse (19) als auch an den Adern (12) zündspaltfrei anliegt.

## Claims

1. Explosion-proof assembly (14) having a cable connecting device (10) and a cable (11) connected therewith which has at least one core (12), wherein the at least one core (12) is surrounded by a cable sheath (13) made of an elastomer,
with an outer sleeve (18) of the cable connecting device (10) which has a crimp portion (23) consisting of a plastically deformable first material,
with an inner sleeve (19) of the cable connecting device (10) which is coaxially enclosed by the outer sleeve (18) and has a cylindrical cable channel (20), the inner diameter of which substantially corresponds to the outer diameter of the cable sheath of the cable (13), wherein the inner sleeve (19) consists of an elastically deformable second material,
wherein a mechanical connection between the cable connecting device (10) and the cable (11) is created by plastic deformation of the crimp portion (23) of the outer sleeve (18), wherein the inner sleeve (19) and the cable sheath (13) are deformed elastically and the cable sheath (13) lies without an ignition gap against the at least one core (12) and against the inner sleeve (19).

2. Explosion-proof arrangement according to claim 1, **characterised in that** in undeformed state, the crimp portion (23) of the outer sleeve (18) has an inner diameter (D) which substantially corresponds to the outer diameter of the inner sleeve (19).

3. Explosion-proof arrangement according to claim 1 or 2, **characterised in that** at least one seal (36) is arranged between the inner sleeve (19) and the outer sleeve (18).

4. Explosion-proof arrangement according to claim 3, **characterised in that** the seal (36) is arranged in a ring groove (37) in the inner sleeve (19) or the outer sleeve (18).

5. Explosion-proof arrangement according to claim 4, **characterised in that** the depth of the ring groove (37) is smaller than the radial dimension of the cross-section contour of the undeformed seal (36).

6. Explosion-proof arrangement according to any of the preceding claims, **characterised in that** the length (L) of the crimp portion (23) is greater than the inner diameter (D) of the crimp portion (23).

7. Explosion-proof arrangement according to any of the preceding claims, **characterised in that** the length (L) of the crimp portion (23) is at least 6 millimetres.

8. Explosion-proof arrangement according to any of the preceding claims, **characterised in that** the first material is steel.

9. Explosion-proof arrangement according to any of the preceding claims, **characterised in that** the second material is a wrought alloy, in particular an aluminium wrought alloy.

10. Explosion-proof arrangement according to any of claim 1 to 8, **characterised in that** the second material is an elastomer.

11. Method for production of an explosion-proof mechanical connection between a cable (11) and a cable connecting device (10) which has an outer sleeve (18) with a crimp portion (23) and an inner sleeve (19) with a cylindrical cable channel (20), the inner diameter of which corresponds approximately to the outer diameter of a cable sheath (13) of the cable (11), wherein the outer sleeve (18) consists of a plastically deformable first material, and wherein the inner sleeve (19) consists of an elastically deformable second material, and wherein the cable (11) comprises several cores (12) which are surrounded by a common outer sheath (13) of an elastomer material, with the following steps:
- passing the cable (11) through the cable channel (20) of the inner sleeve (19) and arranging the outer sleeve (18) coaxially to the inner sleeve (19),
- deforming the crimp portion (23) of the outer sleeve (18) with a crimping tool so that the inner sleeve (19) and the cable sheath (13) deform elastically, and the cable sheath (13) lies with no ignition gap against both the inner sleeve (19) and the cores (12).

## Revendications

1. Agencement antidéflagrant (14) comprenant un système de jonction de câble (10) et un câble (11) qui est raccordé à celui-ci et présente au moins un conducteur. (12), le conducteur (12), au nombre d'au moins un, étant entouré d'une gaine de câble (13) constituée d'un élastomère,
comprenant un manchon extérieur (18) du système de jonction de câble (10), qui présente une partie de sertissage (23), laquelle est constituée d'un premier matériau plastiquement déformable,
comprenant un manchon intérieur (19) du système de jonction de câble (10), qui est entouré de façon coaxiale par le manchon extérieur (18) et qui présente un conduit de câble (20) cylindrique dont le diamètre intérieur correspond sensiblement au diamètre extérieur d'une gaine du câble (13), le manchon intérieur (19) étant constitué d'un deuxième matériau plastiquement déformable,
sachant qu'une jonction mécanique est réalisée entre le système de jonction de câble (10) et le câble (11), par déformation plastique de la partie de sertissage (23) du manchon extérieur (18), sachant que le manchon intérieur (19) et la gaine de câble (13) sont déformés plastiquement et la gaine de câble (13) est appliquée sans interstice explosible contre le conducteur (12), au nombre d'au moins un, et contre le manchon intérieur (19).

2. Arrangement antidéflagrant selon la revendication 1, **caractérisé en ce que**, à l'état non déformé, la partie de sertissage (23) du manchon extérieur (18) présente un diamètre intérieur (D) qui correspond sensiblement au diamètre extérieur du manchon intérieur (19).

3. Arrangement antidéflagrant selon la revendication 1 ou 2, **caractérisé en ce qu'**au moins un joint d'étanchéité (36) est disposé entre le manchon intérieur (19) et le manchon extérieur (18).

4. Arrangement antidéflagrant selon la revendication 3, **caractérisé en ce que** le joint d'étanchéité (36) est disposé dans une rainure annulaire (37) dans le manchon intérieur (19) ou le manchon extérieur (18).

5. Arrangement antidéflagrant selon la revendication 4, **caractérisé en ce que** la profondeur de la rainure annulaire (37) est inférieure à la dimension radiale du contour de section transversale du joint d'étanchéité (36) non déformé.

6. Arrangement antidéflagrant selon l'une des revendications précédentes, **caractérisé en ce que** la longueur (L) de la partie de sertissage (23) est supérieure au diamètre intérieur (D) de la partie de sertissage (23).

7. Arrangement antidéflagrant selon l'une des revendications précédentes, **caractérisé en ce que** la longueur (L) de la partie de sertissage (23) est d'au moins 6 millimètre.

8. Arrangement antidéflagrant selon l'une des revendications précédentes, **caractérisé en ce que** le premier matériau est de l'acier.

9. Arrangement antidéflagrant selon l'une des revendications précédentes, **caractérisé en ce que** le deuxième matériau est un alliage corroyé, en particulier un alliage d'aluminium corroyé.

10. Arrangement antidéflagrant selon l'une des revendications 1 à 8, **caractérisé en ce que** le deuxième matériau est un élastomère.

11. Procédé de réalisation d'une jonction mécanique antidéflagrante entre un câble (11) et un système de jonction de câble (10) qui comprend un manchon extérieur (18), doté d'une partie de sertissage (23), et un manchon intérieur (19) doté d'un conduit de câble (20) cylindrique dont le diamètre intérieur correspond à peu près au diamètre extérieur d'une gaine de câble (13), le manchon extérieur (18) étant constitué d'un premier matériau plastiquement déformable, et le manchon intérieur (19) étant constitué d'un deuxième matériau plastiquement déformable, et le câble (11) présentant plusieurs conducteurs (12) qui sont entourés d'une gaine de câble (13) commune faite d'un matériau élastomère, comprenant les étapes suivantes :
- passage du câble (11) à travers le conduit de câble (20) du manchon intérieur (19) et mise en place du manchon extérieur (18), coaxialement avec le manchon intérieur (19),
- déformation de la partie de sertissage (23) du manchon extérieur (18) avec un outil de sertissage, de sorte que le manchon intérieur (19) et la gaine de câble (13) se déforment de façon élastique et la gaine de câble (13) est appliquée sans interstice explosible aussi bien contre le manchon intérieur (19) que contre les conducteurs (12).
